(19) **Europäisches Patentamt / European Patent Office / Office européen des brevets**

(11) **EP 4 060 306 B1**

(12) **EUROPEAN PATENT SPECIFICATION**

(45) Date of publication and mention
of the grant of the patent:
**19.02.2025 Bulletin 2025/08**

(21) Application number: **22172443.8**

(22) Date of filing: **27.06.2018**

(51) International Patent Classification (IPC):
*G01L 5/28* (2006.01)       *G01L 5/00* (2006.01)
*B60T 17/22* (2006.01)       *G01M 17/04* (2006.01)
*F16D 66/00* (2006.01)       *F16D 65/092* (2006.01)
*F16D 69/00* (2006.01)       *F16D 66/02* (2006.01)

(52) Cooperative Patent Classification (CPC):
**B60T 17/221; B60T 17/22; F16D 65/092;
F16D 66/021; F16D 69/00; G01L 5/0028;
G01L 5/28; G01M 17/04;** F16D 2066/005;
F16D 2066/006

(54) **DEVICE FOR AUTOMATIC CALIBRATION OF A BRAKE PAD**

VORRICHTUNG ZUR AUTOMATISCHEN KALIBRIERUNG EINES BREMSBELAGES

DISPOSITIF D'ÉTALONNAGE AUTOMATIQUE D'UNE PLAQUETTE DE FREIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2017   IT 201700073192
28.09.2017   US 201715719320
28.09.2017   US 201715719304**

(43) Date of publication of application:
**21.09.2022 Bulletin 2022/38**

(62) Document number(s) of the earlier application(s) in
accordance with Art. 76 EPC:
**18732377.9 / 3 622 262**

(73) Proprietor: **ITT Italia S.r.l.
20020 Lainate (MI) (IT)**

(72) Inventors:
• **SOLARI, Mattia
  Luserna San Giovanni (Torino) (IT)**
• **SERRA, Stefano
  San Pietro Val Lemina (Torino) (IT)**
• **TRUCCONE, Paolo
  Vigone (Torino) (IT)**
• **MEDURI, Laura
  Cervo (Imperia) (IT)**

(74) Representative: **Rapisardi, Mariacristina
Ufficio Brevetti Rapisardi S.r.l.
Via Serbelloni, 12
20122 Milano (IT)**

(56) References cited:
**US-A1- 2016 084 331       US-B2- 7 398 669**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

As is well known, the customer-supplier relationship is based on the principle of the supply of a product of a defined quality, at a price commensurate with that quality.

In this regard, quality control techniques assume fundamental relevance from the supplier's viewpoint, as does the guarantee of product quality for the customer.

At present, therefore, quality management is aimed at the production of an extremely reduced number of defective parts.

Every production system is affected by errors.

In the case of quality control of brake pads for motor vehicles, this operation is normally carried out by withdrawing a sample pad, after a predefined number of pads produced, and then analysing it in a remote place.

If the pad is judged to be in conformity, i.e. free of defects, the entire product lot to which the sample pad belongs will likewise be judged to conform.

This type of control cannot be performed for a substantial number of pads, but only for a limited number of the same, and consequently cannot be applied on the pad production line.

Furthermore, quality control of a pad becomes impracticable with the current techniques if the pad is not of a traditional type, but it rather sensor-equipped, that is, fitted with a sensor capable of picking up information on the braking of a vehicle.

For example, in production lines for the manufacture of sensor-equipped pads, the main difference compared to a standard pad is the presence of a completely new manufacturing step called calibration.

The calibration process is a test applied at the end of the production line or during an intermediate phase thereof in order to evaluate the technical and functional characteristics of the sensor-equipped pad and it is also an actual calibration process designed to ensure that the sensor-equipped pads actually act as absolute sensors.

US 2016/0084331 A1 teaches a method for the real time estimation of the applied pressure and noisiness in a brake element.

The task that the present invention sets itself is to provide a method for the automatic calibration of a brake pad that does not have the limitations of the prior art.

The task is achieved by a method according to Claim 1.

    Fig. 1 is a schematic side elevation view of a device implementing the method according to the invention;
    Fig. 2 is a schematic plan view of a backplate of a traditional pad and of a sensor-equipped pad to be calibrated with the device implementing the method according to the invention;
    Fig. 3 is a side elevation view of a variant embodiment of the device implementing the method according to the invention;
    Fig. 4 is a rear elevation view of a variant embodiment of the device implementing the method according to the invention, wherein the mechanical stress means is defined by an endless screw according to the invention;
    Fig. 5 is a side elevation view of the variant embodiment of fig. 4 of the device implementing the method according to the invention;
    Fig. 6 is a detailed side elevation view of the variant embodiment of the device implementing the method according to the invention;
    Fig. 6a shows an exemplification of a contacting device;
    Fig. 7 is a perspective view of the second element of the variant embodiment of the device implementing the method according to the invention;
    Fig. 8 is a schematic side elevation view of the threaded bars of the device implementing the method according to the invention;
    Fig. 9 is a schematic front elevation view of the threaded bars of the device implementing the method according to the invention;
    Fig. 10 shows the complete layout with the cage enclosing the machine for safety reasons and the display screen and the double folding door used to close the cage during operation;
    Fig. 11 shows a further embodiment of the invention.

With particular reference to the above-described figures, the device implementing the method according to the invention for automatic calibration. denoted in its entirety by the reference number 1, comprises a supporting base 2 for stabilising the device during its operation.

The base 2 is preferably metallic and provides stability and support to the entire device implementing the method according to the invention during calibration and compression of the pads, relative to the braking device of a vehicle, due to the high level of pressures and forces applied.

Hereinafter pad will mean a pad equipped with a sensor 80 of the type comprising a metal support element, a block of friction material supported by the metal support element, and one or more sensors supported by the metal support element and interposed between the block of friction material and the metal support element.

The sensors are capable of detecting, during use on a vehicle, the forces that are exchanged during use between the block of friction material and the element to be braked, defined by the disc constrained to the wheel.

A sensor-equipped pad results in the possibility of detecting and/or foreseeing the generation of numerous problems, such as anomalous wear on the brake pads, for example because they "touch" the disc even when the brake is not activated, for example due to a poor adjustment of the brake callipers, rather than undesirable noise, vibrations and squealing during braking.

The automatic calibration device 1 implementing the method according to the invention comprises at least one control panel 6, a pad retaining means, a mechanical stress means generating on the pad a normal force in combination with a shear force or a normal force in combination with a torque and configured so as to reproduce the typical forces acting upon said pad during real braking of a vehicle, and sensors for detecting the normal force and the shear force or sensors for detecting the normal force and the torque.

On the device 1 implementing the method according to the invention there is a control panel 6 for the management thereof, which comprises all the push buttons for blocking the calibration test for emergency reasons during the calibration operations.

The panel must further have service push buttons for starting and selecting the calibration tests to be performed and a screen 5 for displaying information related to the test underway, for example, information relative to the pressure and/or forces and/or torques applied.

The panel 6 must also be able to provide calibration test reports stating the values measured by the device and relating to a type of pad during the calibration procedures, as well as the statistical values thereof, such as mean maximum, minimum and standard deviations and, finally, the calibration parameters and an indication as to whether the test has been passed or not according to the initial predefined values of the parameters.

The panel 6 must take into consideration the control of the ECU in order to measure the pads and synchronise them with the measurements of the sensors installed in the device 1 implementing the method according to the invention and used as a reference for comparison with those of the pad.

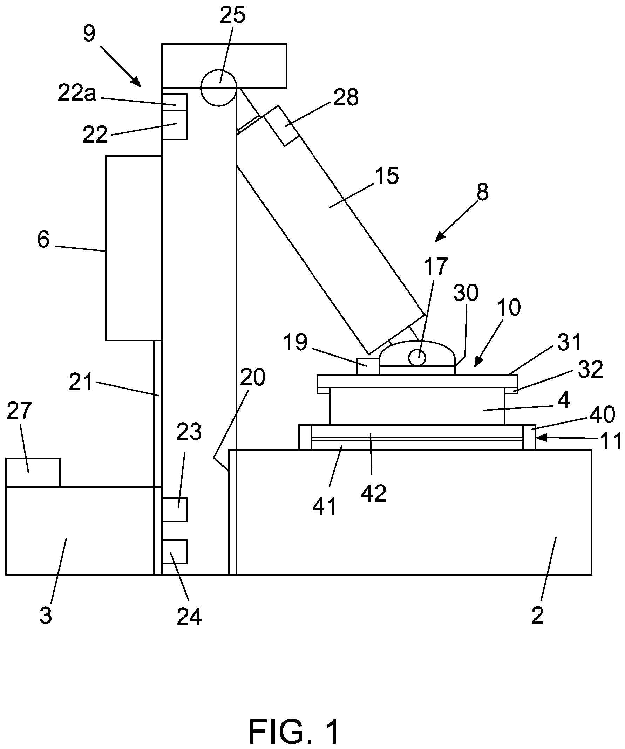

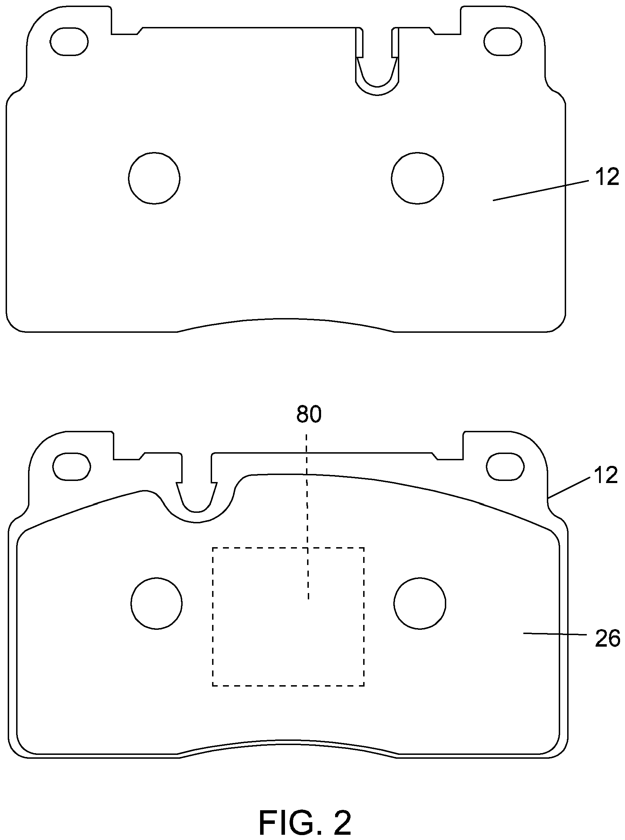

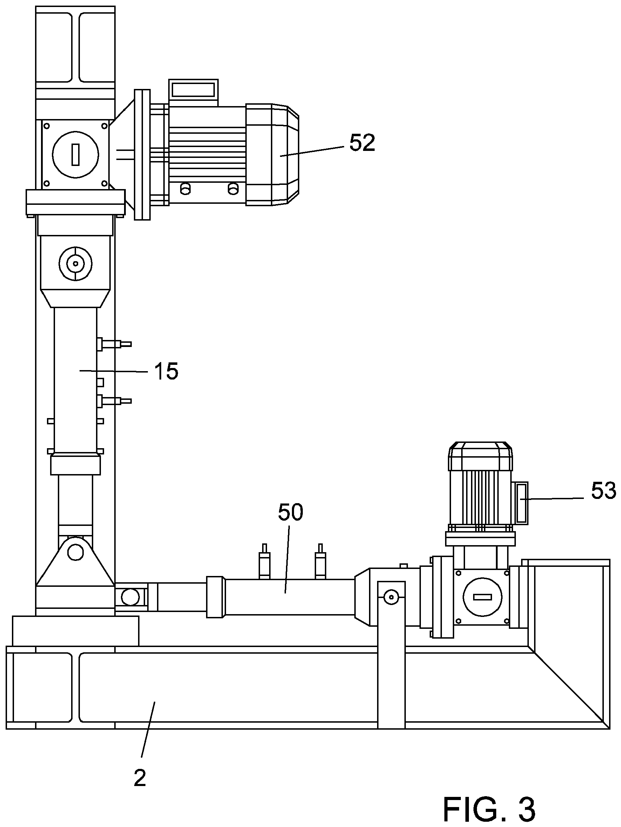

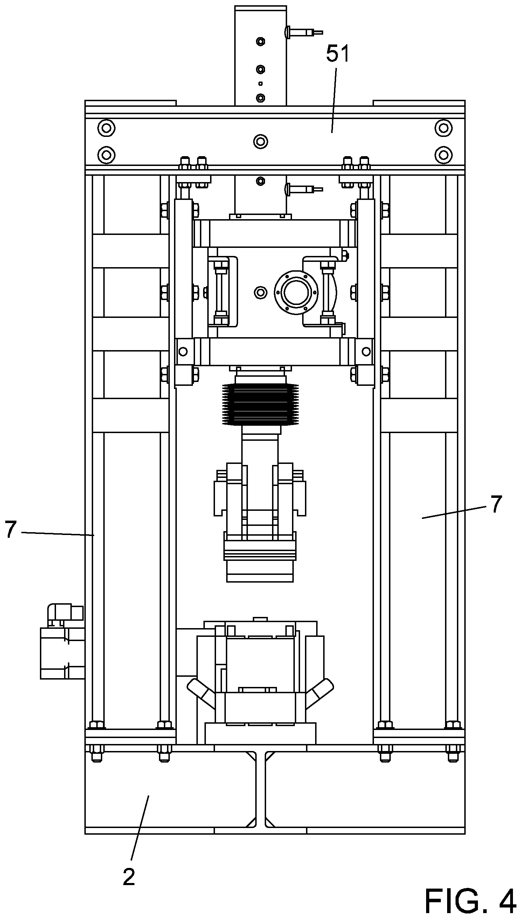

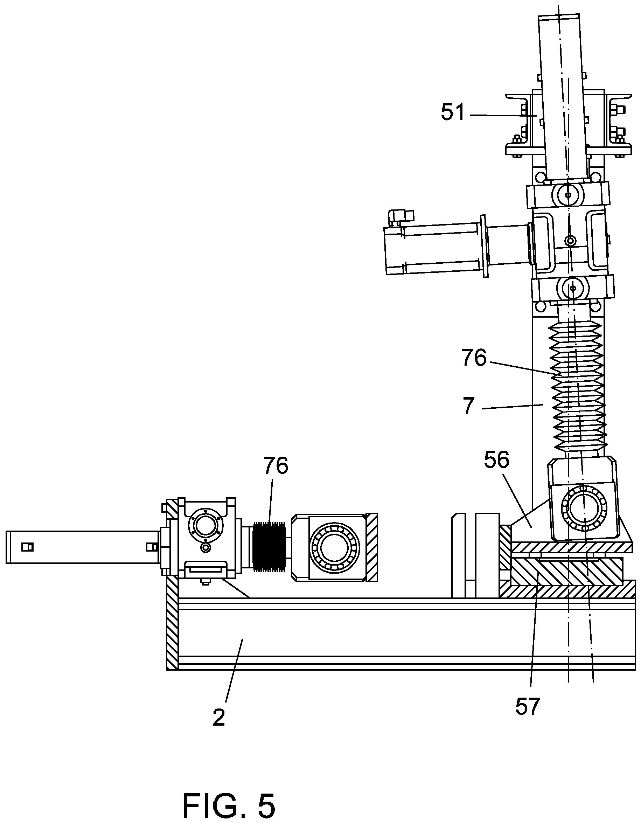

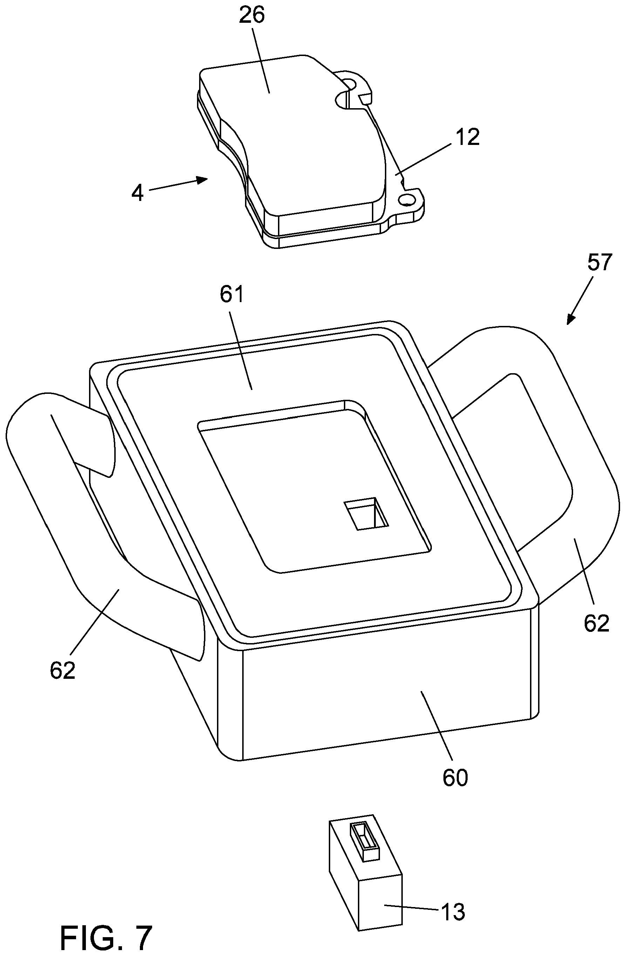

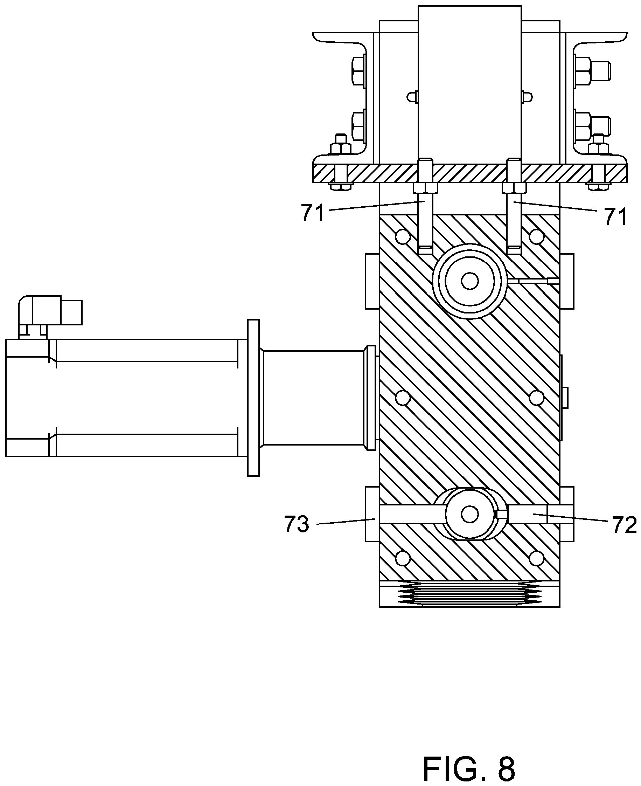

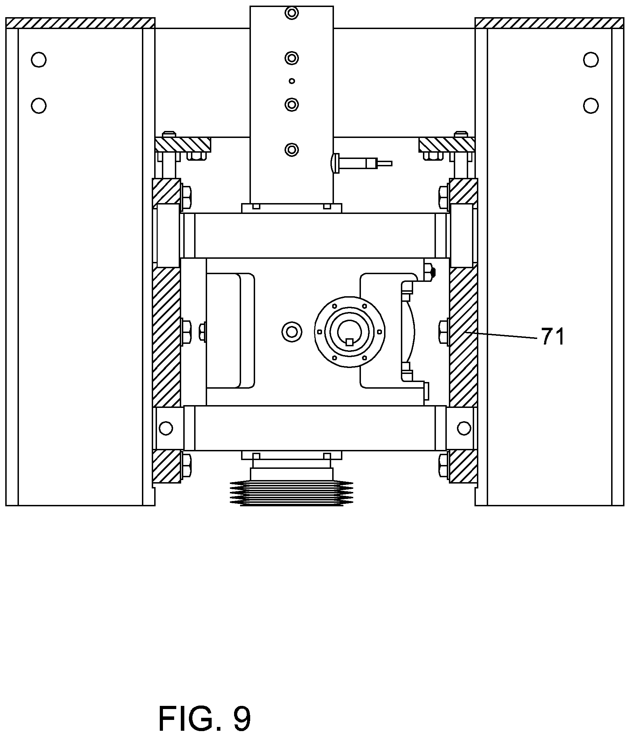

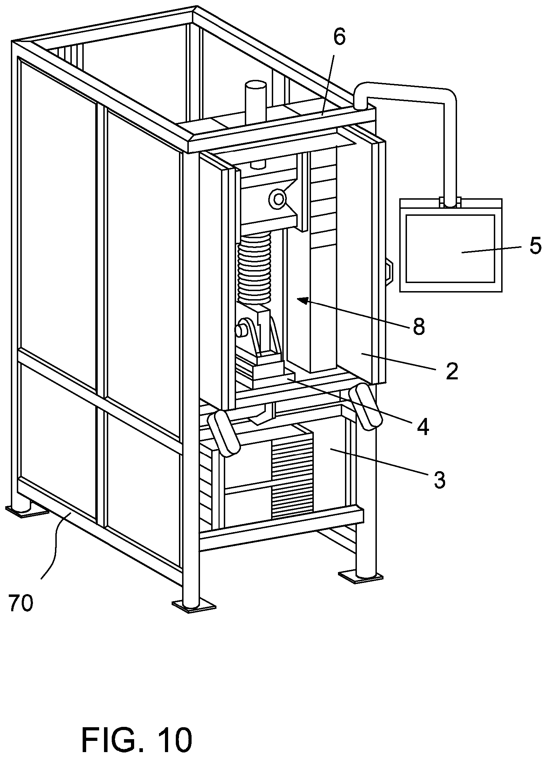

We shall now make reference to the embodiments illustrated in figures 1 - 10. In a first technical solution, the device 1 implementing the method according to the invention comprises at least one fluid-dynamic compressor 3 for generating pressure ramps and exerting an optimal pressure on a pad 4 to be calibrated, operating at a pressure comprised between approximately 5 and 150 bar.

The device 1 implementing the method according to the invention also has at least one supporting column 7 associated with the supporting base 2 and suitable for mechanically supporting at least the mechanical stress means, which in this case is a pressure means, generically indicated by 8, for generating a pre-established pressure on the pad 4 and defined, in said first technical solution, by a first fluid-dynamic piston 15 suitable for delivering the necessary pressure to the pad 4 so as to obtain a shear force beyond a normal force as in real braking in a brake calliper of a vehicle.

As will be seen further below, in a second preferred technical solution, the pressure means 8 is defined by the first piston 15 and by a second piston 50.

There is also an adjustment means, generically indicated by 9, for adjusting the pressure means 8 so as to exert on the pad 4 a shear force, in addition to a normal force.

The pad retaining means 4 comprises a first lock-in means 10 for locking in the friction material 26 of the pad 4 with the pressure means 8 and a second lock-in means 11 for locking in the pad 4, again on the base 2, for the purpose of reproducing the typical forces that act on the pad during the braking of a vehicle.

In particular, the first lock-in means 10 comprises a first profiled edge 32 which reproduces the conformation of the friction material 26 of the pad 4 so as to lock it in optimally during the pressure exerted thereupon by the pressure means 8 in order to enable the transmission of the shear forces during the calibration of the pad in as uniform a manner as possible.

The second lock-in means 11 comprises a second profiled edge 40 which reproduces the conformation of the metal plate 12 or backplate of the pad 4 so as to lock it in during the pressure exerted thereupon in order to enable the transmission of shear forces during the calibration of the pad while avoiding the shifting thereof relative to the base 2.

The metal plate 12 or backplate of the pad conveniently has pins 13a for maintaining electrical contact of the pad 4 with the calibration device 1 implementing the method according to the invention, for example via a connector 13, by means of a contact device that can be manually or automatically actuated and must have a lever to enable contact to be made between the pins and connector in a very precise manner when the pad is positioned in the calibration device at the start of the calibration test.

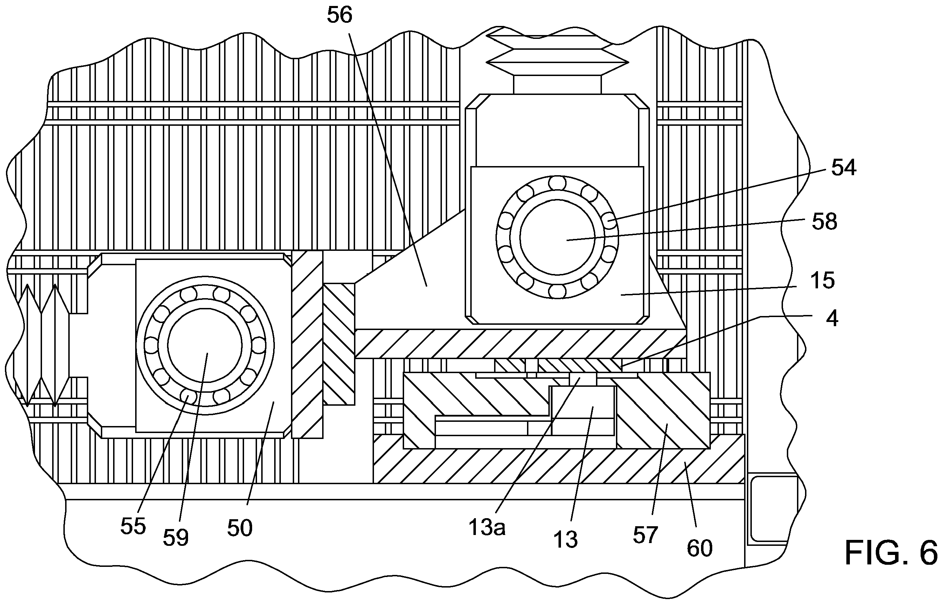

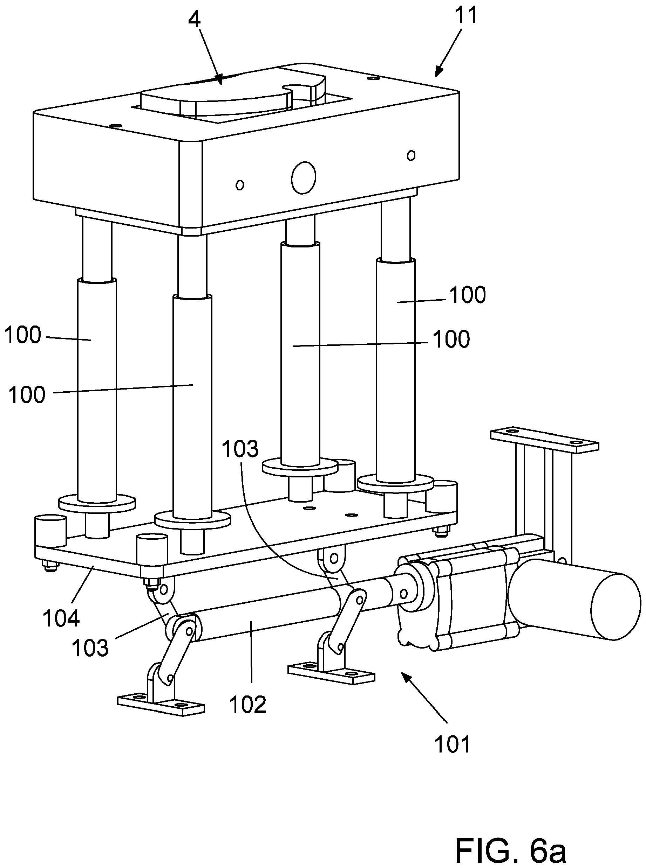

Figure 6a shows a contact device comprising, by way of example, a mechanism with shock absorbers 100 which enable the contacts of the connector 13 to be retracted if the positioning of the same is not optimal, in order not to damage the same by bending them during incorrect contacting, as well as a mechanised system 101 for automatic contacting which comprises, solely by way of example, a specially motorised translating shaft 102 connected by means of a system of connecting rods 103 to a plate 104 for supporting the mechanism with shock absorbers 100.

As noted, the device 1 implementing the method according to the invention further comprises pressure sensors 23 and force sensors 24 for measuring the normal forces and shear forces; they are positioned in such a way as to maximise the reliability of their measurements relative to the values actually detected and transmitted to the pad 4 via the pressure means 8.

More specifically, in the first technical solution the pressure means 8 comprises at least a first fluid-dynamic piston 15, which is advantageously supported by at least one supporting column 7 and can be inclined via the adjustment means 9.

The column 7 also provides mechanical support to the first piston and the compressor 3 for the fluid-dynamic system, which can use oil or air.

Furthermore, in this solution the adjustment means 9 is defined by the column 7 itself, which is used to modify the angle of incidence of the first piston in a range of 50° to 80° with an optimal value of 68.2 degrees (the optimal value obviously depends on the nominal friction coefficient of the brake pad).

In order to modify this angle, the column 7 must be capable of being inclined backward or moved upward relative to the base 2.

Once the first piston has been correctly positioned with a desired angle, the device 1 implementing the method according to the invention has a locking device, not illustrated, for fixing this angle permanently in total safety during the ensuing calibration test.

The device also has a mechanism for lifting the first piston 15 before and after the calibration of said pad for the removal of a calibrated pad with a pad to be calibrated.

In particular the lifting mechanism can be obtained, for example, by means of at least one guide 20 for the longitudinal movement of the column 7.

The guide 20 must be provided with nuts or other locking systems for permanently fixing the chosen angle.

It should also be specified that the first lock-in means 10 comprises a level of the pin 17 of the first piston 15, a device 19 for enabling a precise reading, during the calibration, of the angle formed between the axis of the first piston and the plane of the base 2, on which the pad 4 is positioned, in such a way as to have good control over said parameter, which is fundamental for a positive outcome of the calibration.

In a variant embodiment, the pressure means 8 can comprise an electric motor which activates an endless screw, not illustrated, located on the first piston in order to effect the movement thereof. It is further specified that the base 2 must have a mass and a shape such as to assure high mechanical strength in order to avoid any shifting or fall of the entire device 1 implementing the method according tto the invention during the applications of pressure.

Furthermore, the base 2 must not be subject to deformations.

The upper part of the base 2 must further have threaded holes for mounting and removing the second lock-in means 11, which must be changed on each occasion to provide the flexibility of use necessary when the size of the pads 4 changes.

All of the mechanical components must be selected so as to ensure structural and mechanical stability and prevent wear after intensive calibration cycles.

This can be obtained through the structural dimensioning of the components of the device 1 implementing the method according to the invention and choosing resistant stainless steel materials with a high level of mechanical strength.

The base 2 must also have supporting uprights 21 to adequately support the column 7.

As seen, the column 7 is connected to the guide 20 to enable the longitudinal movement thereof relative to the base 2, so that disposed inside the latter there are all the data transmission cables and the power supply cable, as well as all the tubes for the oil or compressed gas serving to provide the required thrust to the first piston.

Furthermore, the column 7 must be dimensioned in such a way as not to undergo deformations that could either modify the way in which the forces are transmitted or even disable the entire device, for example by precluding the correct setting of the angle of incidence and the loading and unloading of the pads 4 during the calibration process.

The pressure sensor 23 is positioned in the column 7 to permit the measurement of the fluid-dynamic pressure of the fluid-dynamic or gas circuit suitable for cooperating with a safety valve 22.

In the device there are also valves 22a for loading and unloading the oil or gas from the fluid-dynamic system.

Advantageously, as seen, the first piston 15 exerts a pressure on the pad 4, and is connected to the column 7 by means of a connection hub 25 and connected to the fluid-dynamic circuit.

The first piston must have a length such as to end at the first lock-in means 10 so as to be easily mountable and removable, but simultaneously robust and reliable in order to ensure a correct positioning relative to the pad 4 and to enable a pressure as uniform as possible on the latter and an optimal transmission of the shear forces on the friction material 26 of the pad 4.

Before any calibration cycle, the first piston 15 must be capable of being moved laterally or vertically to ensure facilitated access to the pads 4 so that they can be positioned or removed from the device 1 implementing the method according to the invention.

An automatic device 27 can also be provided to set the pressure of the oil or gas to zero to enable the positioning of the pad 4 in the second lock-in means in a correct position before the start of the calibration procedure and restore the pressure of the oil or gas after the correct positioning of a new pad 4 to be calibrated.

The pressure of the fluid-dynamic circuit which supplies pressure to the first piston 15 must be checked and measured during the calibration of the pad by a dedicated sensor 28 connected to the fluid-dynamic circuit.

The force actually transmitted to the piston, and consequently to the pad 4, is measured with precision both in the normal direction and tangentially to the surface of the pad 4 by means of load cells 29 positioned conveniently, for example, on the pin 17 or in the hinge 25 of the first piston 15 or also on the base 2 or in any other equivalent position for such measurements.

All of the sensors must be connected to the control panel 6 to enable a constant, continuous measurement of the forces during calibration.

The fluid-dynamic pressure of the oil that pushes the first piston must have values comprised between 5 bar and 160 bar, and enable a precision of at least 5% for reduced pressure values <25 bar and 2-3% for values above 25 bar.

In detail, the first lock-in means 10 for locking in the friction material 26 must be capable of being slightly inclined so as to be adapted to the surface profile of the pad 4 and this is achieved by means of the pin 17 in the first technical solution or, as we shall see, by means of a first and a second bearing 54 and 55 in a preferred technical solution.

The first lock-in means 10 has a coupling mechanism 30 for locking or releasing it relative to the first piston 15 in such a way that it can be changed according to the conformation of the pad to be calibrated or in the event of damage or wear.

The first lock-in means is defined by a first template 31, which must have a shape and an edge 32 such as to precisely reproduce the profile of the friction material 26 of the pad 4.

The height of the edge 32 must be about 2 mm depending on the pad shape and model.

In order to prevent damage to the friction material 26, it will be advantageous to slightly round the margin of the edge 32 and possibly use soft material to reduce the mechanical stress on the corresponding edge of the friction material of the pad.

In a different embodiment, the first template 31 can be integrated into the first piston without having, in this case, the edge 32.

In such a case it would be desirable to use stainless steel or a material similar to the one used in the vehicle brake disc so as to have the same friction coefficients on the friction material 26 during the calibration of the pad.

The second lock-in means 11 of the pad 4 acts on the backplate 12 thereof and comprises a housing plate 40, which can be made of stainless steel, connected directly to the base 2 by screws and bolts suitable for the securing thereof in such a way as to ensure long-term operating stability despite the enormous forces acting on it.

The housing plate 40 has a second template 41 having an edge 42 that exactly reproduces the profile of the backplate or metal plate 12 of the pad 4.

The housing plate 40 also has a connection system having the above-described pins 13a to permit an electrical connection to the pad 4 during the calibration thereof and send the signals required by the electronic system for the acquisition of the necessary data during the calibration procedure.

The pins 13a must be removably associated in the housing plate 40 and be positioned in a manner that is compatible with the position of the connector 13 of the pad 4, which can vary on each occasion depending on the specific model of the pad to be calibrated.

At the outlet of the housing plate 40 of the backplate of the pad 4 there is a cable for transmitting the signal, not illustrated, having a number of wires necessary to receive the signals of all the sensors integrated into the brake pad, said wires being of a standard length, typically (but not necessarily) less than 1 metre and incorporated in a cable compatible with the pin 13a of the electronic control unit (ECU), which is built specifically to measure and receive the signals of the pad.

**In** a preferred variant embodiment, the pressure means 8 comprises, as said, both the first piston 15, which is used, however, in order to be able to apply only a normal force on the pad 4, and at least a second piston 50 for applying thereupon a normal force or shear force.

Advantageously, the first and second pistons 15 and 50 are disposed perpendicularly to each other on the base 2.

In this solution the base 2 supports two main columns 7, which maintain fixed a third crossbar 51, which has the function of supporting the first piston 15 in a vertical position so as to provide vertical pressure to the pad 4.

The crossbar 51 is not inclinable, but rather fixed, as the shear forces are provided by the second piston 50, parallel to the plane of the base 2, and, consequently, to the surface of the friction material 26.

In particular, the second piston 50 is disposed so as to directly deliver the forces to the surface of the pad 4 on one side thereof, and in particular laterally to the friction material 26.

The first and second pistons 15 and 50 are driven, respectively, by a first and a second electric motor 52 and 53.

The first and second electric motors will provide the energy necessary to supply suitable forces to be applied on the pad 4 via the first and second pistons.

This preferred technical solution assures several advantages compared to the previous one.

Firstly, the two normal and horizontal forces can be exerted separately, making it possible to perform solely a compressibility test on the pad, which in this case can also not be of the sensor-equipped type, but rather be a traditional braking pad devoid of sensors capable of transmitting the values of the forces that are applied thereon.

In this manner, one can apply a compression force alone on the pad, with a direction normal to the surface thereof, without applying shear forces, and measure the variation in thickness as a function of the pressure applied on the pad.

This possibility is very important because it provides a parameter that is extremely important for characterising the production and process of manufacture both of sensor-equipped pads and traditional pads and enables virtually 100% control of production.

The second advantage is an increase in flexibility for delivering different shear forces at a given pressure, it being understood that the optimal condition defined by the formula

$$\mu = \frac{F_t}{F_N} = tan\,\vartheta$$

can always be restored by setting the ratio between the two normal and horizontal forces applied on the pad, which in this case is sensor-equipped.

In particular, the first and second pistons apply the vertical force and the horizontal force on a first element that acts directly on the pad held fixed by a second element which houses both the pad and the pins 13a to permit an electrical connection between the pad and the external electronic circuit for receiving the signals of the pad.

The first take-up element 56 for taking up the force from the first piston 15 and from the second piston 50 has a flat clamping surface on the exposed surface of the friction material of the pad 4.

The first and second pistons 15 and 50 have, in proximity to the base 2, a first and a second bearing 54 and 55 to provide a minimum tilting capability to the first and second elements 56 and 57 to eliminate the friction forces between them and the first and second pistons and maintain solely the contribution of the friction force between the pad and the steel plate, in order to give a real representation of the process of rubbing between the disc and pad in the brake calliper.

The first and second bearings 54 and 55 have load cells 58 and 59 inside them which are capable of communicating data related to the pressure exerted on the pad.

In this manner, advantageously, on the surface of the pad 4, in particular on the side of the friction material 26, stability is obtained thanks to the friction forces that arise between the pad and the first element 56.

In such a case, in order to avoid mechanical failures, the condition

$$\frac{F_t}{F_N} < \mu_s$$

must be satisfied, where $\mu_s$ is the static friction coefficient.

On the side of the backplate 12, the second element 57 will be used; it has a base 60 having a recess 61 for reproducing the profile of the backplate 12, which has a thickness ranging from 4 to 6 mm and shapes varying according to the pad model.

The recess 61 has a thickness of at least 3-4 mm to enable a lateral hold on the pad 4 during the calibration operation and limit all lateral movements thereof.

The second element 57 further has a connector 13 for electrically connecting the pad, which, as said, is sensor-equipped in this case, with the electrical part of the device 1 implementing the method according to the invention.

The second element 57 also has two handles 62 to permit a simplified removal thereof following pad changes or simply because of wear.

The second element will be maintained fixed to the base 2 by mechanical attachment points suited to the purpose and not illustrated.

In this case as well, the pressure means can have an endless screw 76 suitable for exerting pressure on the pad.

It should also be specified that, in the preferred variant embodiment, the first piston has threaded bars 71 for adjusting its distance from the base 2 and a spring-operated presser 72 for maintaining the end thereof that acts on the pad perfectly parallel to the surface of the same.

The verticality of the spring-operated presser is suitably adjusted by means of an alignment cam 73.

In light of the foregoing, it is very important for the control panel 6 to be able to correctly run the calibration procedure according to the calibration protocol defined at the time of setting the calibration procedure itself.

In particular, the control panel is capable of ensuring the safety of the operators and technicians who perform the calibration by blocking any calibration run if the overall hardware or software controls are not positive, of managing the start and stop of the calibration, of permitting and managing the loading and unloading of the hydraulic or electrical systems and maintenance operations in general, of managing the loading and removal of the pads to be calibrated in the calibration system, of controlling and maintaining the level of forces and pressure according to the procedure and test protocols, of memorising the data of the sensors during the calibration procedure and the data on a central or locale database, of sending and receiving the data or calibration settings of the calibration system, of managing the step of printing on the brake pad after the calibration in order to print a permanent Data Matrix and memorise, accordingly, the values received to permit the traceability of the structural and functional characteristics of the pad.

Control of the calibration of the pad must be performed, insofar as the pressure is concerned, on the fluid-dynamic circuit or by means of the electric motor driving the piston, and insofar as the applied forces are concerned, by using the normal force measured by the load cells.

The number of pressure values detected during the calibration will preferably be a minimum of 4 and a maximum of 10.

The pressure values must preferably correspond to any of the following values expressed in bars:

$$P_i = 5 + (i - 1) * 145/(N - 1)$$

Where i is an index of the specific point of measurement and N is the total selected number of points to be measured during the calibration.

In this case a constant specific interval of between 5 and 150 bar is assumed.

The control panel must have power inputs, preferably 110/220 VAC, in order to power the entire device 1 implementing the method according to the invention.

The electrical insulation and earthing must be suitably set so as to avoid leakage currents and EMC emissions or problems of immunity and electrostatic discharges (ESD).

In particular, any leakage of current toward the base or toward the pads must be avoided in order to eliminate any disturbance in the measurement of data during the calibration.

The control panel must also have the possibility of interfacing with an external unit such as a PC to be configured to enable the downloading either of the calibration data or DataMatrix of the pad and it must also control a trigger preferably of the -10, 10 V type to manage the calibration steps and coordinate the various electronic components for acquiring the data of the pad sensors. During a calibration session, each value of pressure used to compress the pad must be maintained stable for a period of time, typically comprised between 1s and 10s, which should be configured by the software in the control panel during the calibration setting phase.

Finally, the panel should also have indicators, such as LEDs, to enable real-time readings and monitoring of the values observed via the pressure and force sensors installed in the device 1 implementing the method according to the invention.

This makes it always possible for the control and alarms to be activated in the event of an anomaly relative to the predetermined values fixed during the setting phase.

Thanks to the device 1 implementing the method according to the invention, the calibration procedure substantially corresponds to the real conditions in terms of pressure and shear forces, and to those of the brake calliper during braking of a vehicle.

In particular, the ratio between the normal forces, correlated to the pressure, and the shear forces, correlated to the friction forces, must be as close as possible to the real coefficient of friction between the brake pad and disc of the vehicle.

The operation of the device 1 implementing the method according according to the invention is as follows.

The value of the friction coefficient is known from the design stage and is adjusted at the start of the calibration procedure.

The angle of incidence of the piston is adjusted and the angle of inclination thereof is changed until reaching the desired value according to the following formula:

$$\mu = \frac{F_t}{F_N} = tan\,\vartheta$$

Where $F_t$ is the tangential force, $F_N$ the normal force, and q the angle between the axis of the piston and the plane of the surface of the friction material of the brake pad.

This formula is very important because it takes account of the non-linear behaviour of the friction material under pressure, thanks to the fact that the elastic constants thereof depend on the pressure.

Consequently, failure to reach a condition close to the friction coefficient, in terms of the ratio of forces, will cause an incorrect calibration of the pad, since the forces will be transmitted in a different manner from the real braking conditions of the vehicle.

In a normal calibration of a pad 4, after the calibration parameters have been set by means of suitable software, which is not the subject matter of the present invention, the device 1 implementing the method according to the invention will be set in a pad loading/unloading mode to facilitate the movement of the first piston 15 and enable correct positioning of the pad in the second lock-in means 11.

The first piston is repositioned with the first lock-in means 10 for locking in the friction material 26 in such a way that the edge 32 thereof adheres perfectly to the edge of the friction material. Then the device 1 implementing the method according to the invention is set back into the calibration mode by restoring pressure to the fluid-dynamic circuit so as to lock the first piston in the pre-established position.

The safety cage 70 is closed again so that calibration of the pad can begin.

The test is performed automatically and in sequence according to the number of points established and defined via the software.

In the absence of such a definition, the calibration will be performed according to the default setting, that is, by carrying out 4 measurements at 5, 53.3, 101.6 and 150 bar, maintained for 4 seconds with 5 second intervals of pressure increases to the next value and stabilisation thereof. At the end of calibration, according to what was previously specified, the device 1 implementing the method according to the invention automatically comes to a stop and saves all the data in a predefined file via configuration software.

During the calibration of the pad the values of the sensors must be visible in real time also from the control panel 5 via dedicated LED indicators.

At the end of calibration, the operator must set the machine in the brake pad unloading mode, open the safety cage 70 by releasing the lock mechanism of block and move the first piston to access the pad and remove it.

The whole procedure will be repeated to calibrate a new pad.

In case of the device with a first and second piston disposed perpendicular to each other, the operation is the same as that of the device having only the first piston, since only the method of applying the forces changes, while the result does not change.

Another important additional feature of the machine is that of enabling an in-line measurement of compressibility in 100% of the pads produced, thus assuring high standards of quality. This is possible thanks to the inclusion of an additional module, preferably applied to the piston 15 in figure 6, consisting of a system for measuring the distance between two fixed points, one on the pusher and one on the base on which the pad to be calibrated rests. This measurement can be conveniently performed by means of laser measurement systems, which in any case assure precisions within about one micron. In this manner, if, for example, only a normal force is exerted, it will be possible to simultaneously measure both the pressure exerted and the consequent compression of the friction material and/or underlayer of the brake pad, which provide the values of compressibility of the pad itself.

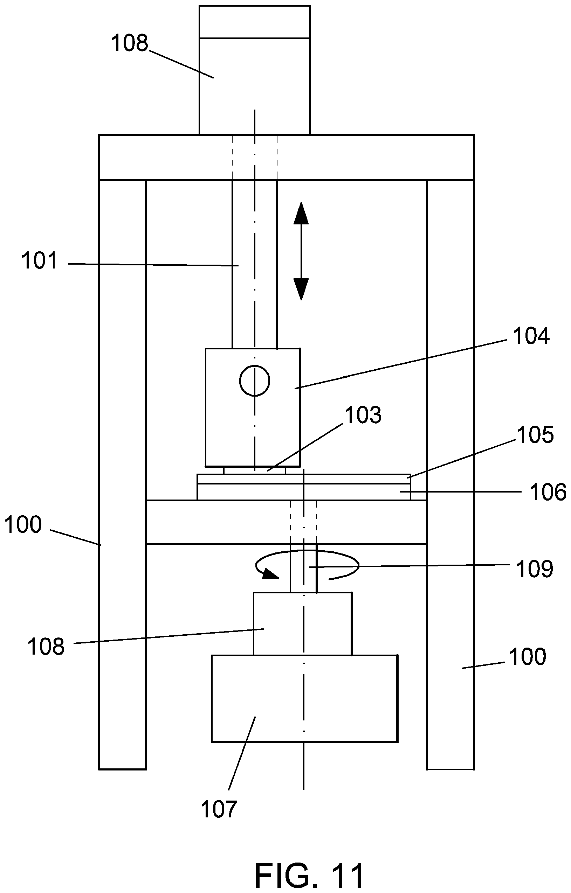

We shall make reference, finally, to the embodiment of the invention illustrated in figure 11.

In the previous cases, the forces required on the pad in order to reproduce the same vertical or pressure loads and the same shear loads experienced by the braking device are generated by a single piston or by two pistons.

In this case the stress means comprises a motorised disk 105 which applies torque to the pad 103 and a vertical piston 101 which applies the normal force to the pad 103.

The pad retaining means 10 comprises a terminal pressing plate 104 of the vertical piston 101.

The pressing plate 104 supports the pad 103 and presses it against the disk 105.

More precisely, the supporting base for stabilising the device during the operation thereof comprises a structure with uprights 100 which supports the vertical piston 101.

The vertical piston 101 is driven by a motor 102, preferably an electric motor, in order to provide the normal force which the piston 101 exerts on the pad 103.

The pressing plate 104 has a bearing for micrometric adjustment in the event of imperfect planarity, so as to provide a pressure as uniform as possible.

The piston 101 presses the pad against the disk 105, as occurs in the real world.

The disk 105 can be an actual brake disk used in a vehicle equipped with the same braking device and the same brake pad undergoing calibration, or else it can be a disk made with the same material as a brake disk.

A tool 106 is used to install disks 105, which may also differ in terms of size and material, on the calibration device.

The disk 105 and the position of the pad 103 must be selected in a manner that is suitable for simulating the same condition as in the braking device of the vehicle with the same radius provided for in the braking device of the vehicle.

The tool 106 is then integrated into the calibration device to support the disk 105 and enable the delivery of torsion force to the pad 103 so as to simulate the braking torque experienced by the pad during a braking of the braking device.

Because of the intense vertical forces due to the high pressure intervals required to replicate the conditions experienced by the braking device (1 - 180 Bar), the tool 106 is mechanically robust and allows very small torsional movements at the pad 103 about the axis of the disk 105, as actually occurs in a vehicle.

To enable these movements, there is provided a bearing fixed rigidly onto the base of the calibration device so as to guarantee mechanical robustness and at the same time the rotational movement about the axis of the disk 105.

In this case as well, the calibration device also comprises a motor 107 for rotating the tool 106 and the disk 105 fixedly supported by it, and a coupling 108, for example a differential coupling, for connecting the motor 107 to the shaft 109 that supports the tool 106 in rotation.

With the differential coupling 108, torque values in the order of 6000-10000 Nm are achieved without any need to use motors that are particularly large or powerful.

The mechanical stability of the system is guaranteed by the following condition:

$$\frac{F_t}{F_N} < \mu$$

Where $\mu$ is the nominal static friction coefficient of the specific pad 103.

The aforesaid condition is necessary to avoid rotational movement and maintain a static measurement.

In this case, $F_N$ represents the vertical forces, whilst $F_t$ derives from the braking torque $\tau = RF_t$, with R representing the actual radius of the braking device, which will be the same as used in the dynamometric measurements for that braking device.

The measurement should preferably be made not far from the aforesaid condition in order to reproduce the conditions experienced by the braking device.

A specific control of the torque value is provided for to maintain the aforesaid condition while the pressure increases during the test.

The particularity of this embodiment of the invention consists in the fact that a real torque is provided by the motor 107 so as to subject the pad to a torsional movement and produce a deformation by shear forces on the friction material precisely as occurs in the braking device. Therefore, the main difference is the provision of a real torque instead of shear forces to produce essentially the same effect as in the solutions previously illustrated and described.

In this case, therefore, the torque is directly controlled instead of the shear forces.

Finally, in this specific case a torque sensor (not shown) must be provided for direct measurement of the torque delivered to the pad.

This torque sensor must be positioned along the drive shaft 109, preferably near the coupling 18 or the tool 106 where the disk 105 is housed.

Moreover, a position sensor (not shown), for example of the laser type, may be positioned on the pressing plate 104 to measure the variation in distance between the sensor and the disk 105 when the pad 103 is compressed so as to enable compressibility measurements as well.

**Claims**

1. A method for automatic calibration of a brake pad (4) comprising a block of friction material (26), a support plate or backplate (12) and force sensors capable of detecting forces that are exchanged between the block of friction material (26) and an element to be braked, **characterised in that** of comprising following steps:

   - providing an automatic calibration device (1) comprising a supporting fixed base (2), at least one control panel (6), brake pad (4) mechanical stress means generating on said pad a normal force in combination with a shear force, and brake pad (4) retaining means in turn comprising a first lock-in means (10) for locking in said friction material with said mechanical stress means and a second lock-in means (11) for locking said brake (4) pad on said fixed base (2), and sensors for detecting said normal force and said shear force;
   - locking in said brake pad (4) on said supporting fixed base (2) by said a second lock-in means (11);
   - locking in said friction material (26) with said mechanical stress means by said a first lock-in means (10);
   - generating on said brake pad (4) locked in by said first and second lock-in means (10, 11), a normal force in combination with a shear force adjusted to reach a condition, in terms of ratio of shear force to normal force, equal or close to a value known from a design stage of the friction coefficient between said block of friction material (26) and said retaining means;
   - receiving from the force sensors in the brake pad (4) signals providing calibration data, wherein measurements of force from the force sensors in the brake pad (4) are synchronised and compared with the measurements of force from the sensors installed in the device (1);
   - memorising said calibration data.

2. A method for automatic calibration of a brake pad (4) according to claim 1, **characterised in** providing a step of printing on the brake pad after the calibration a permanent Data Matrix permitting the traceability of the structural and functional characteristics of the brake pad (4).

3. A method for automatic calibration of a brake pad (4) according to any previous claim, **characterised in that** said step of generating on said brake pad (4), a normal force in combination with a shear force includes actuating at least a first fluid-dynamic piston (15) adjusted with an angle of incidence (θ) according to the following formula:

$$\mu = \frac{F_t}{F_N} = tan\,\vartheta$$

where $F_t$ is the shear force, $F_N$ the normal force, and q the angle of incidence between the axis of said first piston and a plane of a surface of the friction material of the brake pad.

4. A method for automatic calibration of a brake pad (4) according to any previous claim, **characterised in that** said step of generating on said brake pad (4) includes actuating said first piston (15) for applying said normal force and at least a second fluid-dynamic piston (50) for applying said shear force, said first and second pistons (15 and 50) being disposed perpendicularly to each other on said base (2).

5. A method for automatic calibration of a brake pad (4) according to any previous claim, **characterised in that** it further includes a step of measuring the compressibility of said brake pad (4) by measuring the relative variation in the distance between said first piston and a base surface of said brake pad (4).

**Patentansprüche**

1. Ein Verfahren zur automatischen Kalibrierung einer Bremsbelagplatte (4), die einen Reibmaterialblock (26), eine Träger- oder Rückenplatte (12) und Kraftsensoren umfasst, welche die zwischen dem Reibmaterialblock (26) und einem zu bremsenden Element ausgetauschten Kräfte erfassen können, **dadurch gekennzeichnet, dass** es folgende Schritte umfasst:

   - Bereitstellung einer automatischen Kalibriervorrichtung (1), die eine feste Stützgrundplatte (2), mindestens ein Bedienfeld (6), Mittel zur mechanischen Belastung des Bremsbelags (4), welche auf den Belag eine Normal- und eine Scherbelastung ausüben, sowie Mittel zur Fixierung des Bremsbelags (4) umfasst, wobei letztere ein erstes Fixiermittel (10) zur Fixierung des Reibmaterials mit den mechanischen Belastungsmitteln und ein zweites Fixiermittel (11) zur Befestigung des Bremsbelags (4) auf der festen Stützgrundplatte (2) beinhalten, und Sensoren zur Erfassung der Normal- und Scherkräfte;
- Befestigung des Bremsbelags (4) auf der festen Stützgrundplatte (2) mittels des zweiten Fixiermittels (11);
- Fixierung des Reibmaterials (26) mit den mechanischen Belastungsmitteln mittels des ersten Fixiermittels (10);
- Erzeugung einer auf den Bremsbelag (4), der durch das erste und das zweite Fixiermittel (10, 11) fixiert ist, wirkenden Normal- und Scherbelastung, die so eingestellt ist, dass ein Verhältnis von Scherkraft zu Normalkraft erreicht wird, das gleich oder nahe einem aus der Entwurfsphase bekannten Wert des Reibungskoeffizienten zwischen dem Reibmaterialblock (26) und den Fixierungsmitteln liegt;
- Empfang von Signalen der Kraftsensoren im Bremsbelag (4), welche Kalibrierungsdaten bereitstellen, wobei die Kraftmessungen der Kraftsensoren im Bremsbelag (4) synchronisiert und mit den Kraftmessungen der in der Vorrichtung (1) installierten Sensoren verglichen werden;
- Speichern der Kalibrierungsdaten.

2. Ein Verfahren zur automatischen Kalibrierung eines Bremsbelags (4) gemäß Anspruch 1, **dadurch gekennzeichnet, dass** nach der Kalibrierung ein permanenter Data-Matrix-Code auf den Bremsbelag aufgedruckt wird, der die Rückverfolgbarkeit der strukturellen und funktionalen Eigenschaften des Bremsbelags (4) ermöglicht.

3. Ein Verfahren zur automatischen Kalibrierung eines Bremsbelags (4) gemäß einem der vorhergehenden Ansprüche, **dadurch gekennzeichnet, dass** der Schritt der Erzeugung einer auf den Bremsbelag (4) wirkenden Normal- und Scherbelastung das Betätigen von mindestens einem ersten fluiddynamischen Kolben (15) umfasst, der mit einem Inzidenzwinkel (θ) gemäß der folgenden Formel eingestellt ist:

$$\mu = \frac{F_t}{F_N} = tan\,\vartheta$$

wobei $F_t$ die Scherkraft, $F_N$ die Normalkraft und q der Inzidenzwinkel zwischen der Achse des genannten ersten Kolbens und einer Ebene der Oberfläche des Reibmaterials des Bremsbelags ist.

4. Ein Verfahren zur automatischen Kalibrierung eines Bremsbelags (4) gemäß einem der vorhergehenden Ansprüche, **dadurch gekennzeichnet, dass** der Schritt der Erzeugung von Kräften auf den Bremsbelag (4) das Betätigen des ersten Kolbens (15) zur Anwendung der Normalkraft und mindestens eines zweiten fluiddynamischen Kolbens (50) zur Anwendung der Scherkraft umfasst, wobei der erste und der zweite Kolben (15 und 50) senkrecht zueinander auf der genannten Basis (2) angeordnet sind.

5. Ein Verfahren zur automatischen Kalibrierung eines Bremsbelags (4) gemäß einem der vorhergehenden Ansprüche, **dadurch gekennzeichnet, dass** es außerdem einen Schritt zur Messung der Kompressibilität des Bremsbelags (4) durch Messung der relativen Änderung des Abstands zwischen dem ersten Kolben und einer Grundfläche des Bremsbelags (4) umfasst.

**Revendications**

1. Procédé de calibration automatique d'une plaquette de frein (4) comprenant un bloc de matériau de friction (26), une plaque de support ou plaque de fond (12) et des capteurs de force capables de détecter les forces échangées entre le bloc de matériau de friction (26) et un élément à freiner, **caractérisé par** les étapes suivantes :

    - fournir un dispositif de calibration automatique (1) comprenant une base fixe de support (2), au moins un panneau de commande (6), des moyens de sollicitation mécanique de la plaquette de frein (4) générant sur ladite plaquette une force normale combinée à une force de cisaillement, et des moyens de retenue de la plaquette de frein (4) comprenant à leur tour un premier moyen de verrouillage (10) pour verrouiller ledit matériau de friction avec lesdits moyens de sollicitation mécanique et un second moyen de verrouillage (11) pour verrouiller ladite plaquette de frein (4) sur ladite base fixe (2), ainsi que des capteurs pour détecter ladite force normale et ladite force de cisaillement ;
    - verrouiller ladite plaquette de frein (4) sur ladite base fixe de support (2) au moyen dudit second moyen de verrouillage (11) ;
    - verrouiller ledit matériau de friction (26) avec lesdits moyens de sollicitation mécanique au moyen dudit premier moyen de verrouillage (10) ;
    - générer sur ladite plaquette de frein (4), verrouillée par lesdits premier et second moyens de verrouillage (10, 11), une force normale combinée à une force de cisaillement ajustée pour atteindre une condition, en termes de rapport de la force de cisaillement à la force normale, égale ou proche d'une valeur connue à partir de la phase de conception du coefficient de frottement entre ledit bloc de matériau de friction (26) et lesdits moyens de retenue ;
- recevoir des capteurs de force de la plaquette de frein (4) des signaux fournissant des données de calibration, où les mesures de force des capteurs de la plaquette de frein (4) sont synchronisées et comparées avec les mesures de force des capteurs installés dans le dispositif (1) ;
- mémoriser lesdites données de calibration.

2. Procédé de calibration automatique d'une plaquette de frein (4) selon la revendication 1, **caractérisé par** l'étape consistant à imprimer sur la plaquette de frein, après la calibration, un Data Matrix permanent permettant la traçabilité des caractéristiques structurelles et fonctionnelles de la plaquette de frein (4).

3. Procédé de calibration automatique d'une plaquette de frein (4) selon l'une quelconque des revendications précédentes, **caractérisé en ce que** ladite étape de génération, sur ladite plaquette de frein (4), d'une force normale combinée à une force de cisaillement comprend l'actionnement d'au moins un premier piston fluidodynamique (15) ajusté avec un angle d'incidence ($\theta$) selon la formule suivante :

$$\mu = \frac{F_t}{F_N} = tan\,\vartheta$$

où $F_t$ est la force de cisaillement, $F_N$ la force normale, et q l'angle d'incidence entre l'axe dudit premier piston et un plan de la surface du matériau de friction de la plaquette de frein.

4. Un procédé de calibrage automatique d'une plaquette de frein (4) selon l'une quelconque des revendications précédentes, **caractérisé en ce que** ladite étape de génération sur ladite plaquette de frein (4) comprend l'actionnement dudit premier piston (15) pour appliquer ladite force normale et d'au moins un deuxième piston fluidodynamique (50) pour appliquer ladite force de cisaillement, lesdits premier et deuxième pistons (15 et 50) étant disposés perpendiculairement l'un à l'autre sur ladite base (2).

5. Un procédé de calibrage automatique d'une plaquette de frein (4) selon l'une quelconque des revendications précédentes, **caractérisé en ce qu'**il comprend en outre une étape de mesure de la compressibilité de ladite plaquette de frein (4) par la mesure de la variation relative de la distance entre ledit premier piston et une surface de base de ladite plaquette de frein (4).

FIG. 1

FIG. 2

FIG. 3

FIG. 4

FIG. 5

FIG. 6

FIG. 6a

FIG. 7

FIG. 8

FIG. 9

FIG. 10

FIG. 11

**EP 4 060 306 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160084331 A1